(19) Europäisches Patentamt | European Patent Office | Office européen des brevets

(11) **EP 4 202 194 B1**

(12) **EUROPEAN PATENT SPECIFICATION**

(45) Date of publication and mention
of the grant of the patent:
**11.02.2026  Bulletin 2026/07**

(21) Application number: **22216785.0**

(22) Date of filing: **27.12.2022**

(51) International Patent Classification (IPC):
**F01N 3/20** *(2006.01)*     **F01N 9/00** *(2006.01)*

(52) Cooperative Patent Classification (CPC):
**F01N 3/208; F01N 3/2013; F01N 9/00;**
F01N 3/2026; F01N 9/005; F01N 2240/14;
F01N 2240/16; F01N 2560/026; F01N 2560/06;
F01N 2570/14; F01N 2900/0416; F01N 2900/0418;
F01N 2900/0602; F01N 2900/1404;
F01N 2900/1602;                              (Cont.)

(54) **AFTER TREATMENT HEATER SYSTEM AND CONTROL**

NACHBEHANDLUNGSHEIZSYSTEM UND STEUERUNG

SYSTÈME DE CHAUFFAGE POST-TRAITEMENT ET COMMANDE

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority:  **27.12.2021  NL 2030304**

(43) Date of publication of application:
**28.06.2023  Bulletin 2023/26**

(73) Proprietor: **DAF Trucks N.V.
5643 TW Eindhoven (NL)**

(72) Inventor: **WEIDEMA, Tim
5643 TW Eindhoven (NL)**

(74) Representative: **V.O.
P.O. Box 87930
2508 DH Den Haag (NL)**

(56) References cited:
**WO-A1-2020/192973     WO-A1-2021/015613
WO-A2-2020/223199     US-A1- 2021 301 743**

(52) Cooperative Patent Classification (CPC): (Cont.)
F01N 2900/1626; F01N 2900/1631; Y02T 10/12

**Description**

BACKGROUND

In modern day diesel engines, measures are taken to minimize fuel consumption and harmful emissions. The emissions of diesel soot and NOx can be reduced in an engine aftertreatment system (EAS). Typical components of such an aftertreatment system may be a diesel particulate filter to capture soot, and a catalytic converter more specifically an SCR (Selective Catalytic Reduction) catalyst that converts NOx into harmless products also known as the deNOx process and a diesel oxidation catalyst (DOC) to (inter alia) increase de deNOX efficiency and oxydize unburned hydrocarbon. Aftertreatment systems may further include a heater system, such as an electric heater system, diesel burner or a diesel oxidation catalyst (DOC) in combination with a HC-doser or elevated hydrocarbon levels. Typically the reactivity of aftertreatment systems increases when temperature of the catalyst material and the exhaust gas increases at least up to a certain temperature. In order to quickly reach a high conversion efficiency of the aftertreatment system after engine start, the heater system may be used to heat the aftertreatment system to an operating temperature, which may be around 200-300 °C. In normal operation, the aftertreatment system can be heated by residual heat from the combustion engine, however, at very low loads, the temperature of the exhaust gas may be too low. The temperature may be influenced by an engine efficiency mode, which controls the efficiency of the engine and an engine out temperature. For high efficiency engine power settings, the temperature may be too low to accommodate a required NOx conversion efficiency of the catalytic converter, in which case the engine aftertreatment system temperature should be increased.

The operating temperature of the aftertreatment system is dependent on the energy content of the exhaust gas, generated by the ICE. In other words, changes in the energy content, i.e. exhaust gas enthalpy, of the exhaust gas, will be the root cause for a changing aftertreatment operating temperature, that may result in different SCR conversion rates. The exhaust gas enthalpy is calculated by:

$$Q = \dot{m} \, cp \, \Delta T$$

Where

Q  = Exhaust gas enthalpy
m  = Exhaust gas massflow
cp  = Specific heat of gas at constant pressure
$\Delta T$  = Temperature difference between the exhaust gas and ambient

However, the engine aftertreatment system contains components with a relatively high thermal mass. Therefore the operating temperature of the system cannot be changed rapidly under varying driving conditions. Therefore, conventionally, the aftertreatment operating temperature is controlled to a temperature which can result in robust deNOx control, irrespective of its required conversion efficiency. This comes at a CO2 cost when the amount of fuel is increased.
Known EAS temperature control methods are described in WO2021/015613, US2021/301743, WO2020/192973, and WO2020/223199.
It is an object of the invention to more efficiently control the heater system, while at the same time generate an amount of enthalpy necessary for a sufficient SCR conversion.

SUMMARY

It is an aspect of the present invention to alleviate, at least partially, the problems discussed above by an internal combustion engine comprising: a heater system disposed in or near an exhaust aftertreatment system including a catalytic converter to generate heat to the exhaust aftertreatment system;
a control system arranged to control the heater system; wherein the control system is programmed to calculate an enthalpy difference of an actual measured exhaust gas enthalpy signal and a time filtered exhaust gas enthalpy signal. When a calculated enthalpy difference signal value is lower than a set threshold value, the control system activates the heater system to generate a catalytic converter temperature to a calculated set target temperature of the catalytic converter, based on a calculated or measured engine NOx output level and a target NOx output level.
By using the time filtered enthalpy signal accordingly it is found that a reliable indicator of the catalytic converter temperature profile can be provided, that is able to display a corresponding dynamic behaviour as a future catalytic converter temperature. Conversely, it can be predicted that a catalytic converter temperature will change when a calculated enthalpy difference signal value is higher than a set threshold value.
The specific position of the heater system may be dependent on practical conditions. It may be a system that can be integral to the aftertreatment system.

Additionally, it can be identified that a prolonged transient driving condition of the engine exists, in which case the aftertreatment system may be timely heated to an increased conversion efficiency of the engine aftertreatment system at higher temperature. At the same time, there will be a reduced CO2 penalty for increasing the aftertreatment temperature when a higher temperature is not necessary. The invention obviates a necessity to keep the catalytic converter at high conversion efficiency temperature at all times, in order to cope with dynamic transient behaviour of the engine. According to the invention, in a steady state engine condition, i.e. a condition where a difference between an actual measured exhaust gas enthalpy and a time filtered exhaust gas enthalpy is lower than a set threshold value, a lower aftertreatment temperature may be accepted that is yet optimal, minimizes a fuel cost and is based on a calculated or measured engine NOx output level, thus allowing for reduced CO2 emissions due to reduced activation of the heater system.

BRIEF DESCRIPTION OF THE DRAWINGS/FIGURES

The accompanying drawings, which are incorporated herein and form part of the specification, illustrate the present invention and, together with the description, further serve to explain the principles of the invention and to enable a person skilled in the relevant art(s) to make and use the invention.

Figure 1 shows a simplified schematic representation of a system setup of an internal combustion engine;
Figure 2 an shows an embodiment with a conventional turbo compressor arrangement;
Figure 3 further exemplifies a control scheme executed by the control system of see Figure 1;
Figure 4A and 4B show exemplary traces of a dynamic cycle and a steady state cycle respectively;
Figure 5 (A, B) shows an exemplary example of an inverse SCR model;
Figure 6 shows a further implementation of the inventive heater control;

DETAILED DESCRIPTION

Unless otherwise defined, all terms (including technical and scientific terms) used herein have the same meaning as commonly understood by one of ordinary skill in the art to which this invention belongs as read in the context of the description and drawings. It will be further understood that terms, such as those defined in commonly used dictionaries, should be interpreted as having a meaning that is consistent with their meaning in the context of the relevant art and will not be interpreted in an idealized or overly formal sense unless expressly so defined herein. In some instances, detailed descriptions of well-known devices and methods may be omitted so as not to obscure the description of the present systems and methods. The term "and/or" includes any and all combinations of one or more of the associated listed items. It will be further understood that the terms "comprises" and/or "comprising" specify the presence of stated features but do not preclude the presence or addition of one or more other features.

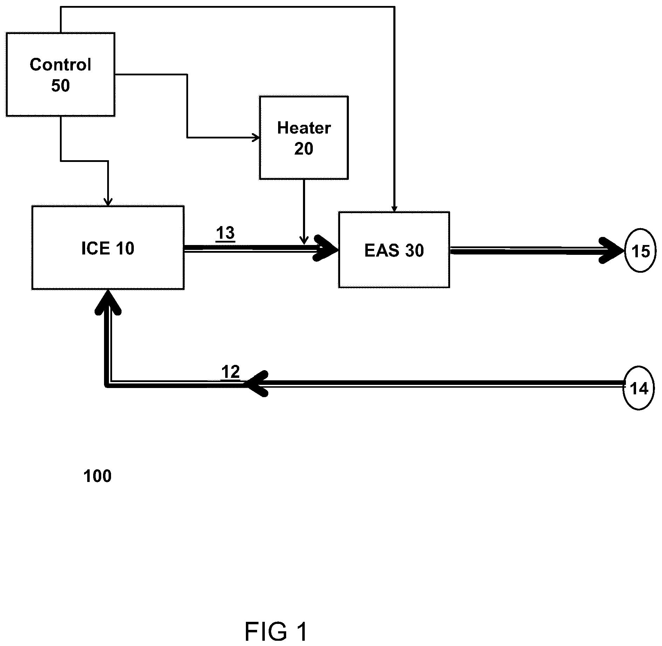

Figure 1 shows a simplified schematic representation of a system setup 100 of an internal combustion engine (ICE 10) and a typical aftertreatment system (EAS 30). The EAS system may comprise a hydrocarbon (HC) dosing unit, a Diesel Oxidation Catalyst (DOC), a Diesel Particulate Filter (DPF), a Urea dosing unit, a Selective Catalytic Reduction catalyst (SCR), an Ammonia Slip Catalyst (ASC) and a Control Module (CM) placed downstream in the exhaust line 13 of the ICE 10 typically including a turbo compressor. This setup is conventional, in the sense that the system elements are known to the skilled person. EAS control 50 in Figure 1 can be provided on the basis of NOx sensor data or a model. This means that this sensor is used indicatively for the control of NOx out of the system, and therefore for the dosing of DEF fluid, which implies the functioning of part of the EAS. In addition, in addition to a NOx sensor, other sensors may be used, for example flow sensors, chemical substance sensors, etc., that can indicate whether the aftertreatment system is affected by degradation. Internal combustion engine (ICE 10) comprises an exhaust line 13 configured to receive exhaust gas from the internal combustion engine 10 and an intake line 12 configured to supply pressurized air from an air intake 14 to the internal combustion engine 10. A heater system 20 is disposed in or adjacent the exhaust line 13 to generate heat that is transported via the exhaust line 13 to an exhaust aftertreatment system (EAS) 30. A control system 50 is arranged to control the heater system 20 to transport heat generated by the heater system 20 towards EAS 30.

During cold start or in other conditions where the operating temperature of the EAS 30 is insufficient, the heater system 20 may also be activated. Heater system 20 may be an electric heater system or it may be a burner or other heat source. A turbo can be controlled to achieve certain boost pressure for the engine intake line 12 and may be a turbo compressor of a known type, where mechanical energy derived from the exhaust turbine may be electrically boosted by an electric motor. The compressor may also be all-electric or may be hybrid - that is, the compressor can be mechanically driven by the turbine and at the same time boosted by an electric motor. The control system 50 may calculate the heat addition delivered by the heater system/burner. This can be determined by a temperature sensor or a model, in view of the exhaust gas flow, that is provided by the heater system 20.

By physical law:

$$Q\_heater\ system = \dot{m}\ cp\ (exh\_temp\_ab - exh\_temp\ bb)$$

Where

| | |
|---|---|
| Q_heater system | = Exhaust gas enthalpy addition by the heater system |
| m | = Exhaust gas massflow |
| cp | = Specific heat of gas at constant pressure |
| exh_temp_ab | = Exhaust gas temperature downstream of heater system/heater system |
| exh_temp bb | = Exhaust gas temperature upstream of heater system/heater system |

As a non limiting example, e.g. during engine idling the exhaust mass flow is normally limited to ~20-50 g/s, which is lower than e.g. a desired 100g/s. In such cases also, the exhaust gas temperature upstream of a heater system/heater system can be in the range of 100-150 degC, or even colder in the case of a cold-start event. In such a condition taking into account a maximum temperature tolerance of the heater system or engine after treatment system, the maximum heat enthalpy may be limited to about 5 kW, which is below a typical capacity of a heater system, which could be in the order of 8-30 kW, e.g. 10 kW. To be able to deliver the heat power while keeping the temperature in acceptable limits, the exhaust flow may be increased to increase heat transport out of the heater and to prevent the heater system exceeding a maximum temperature.

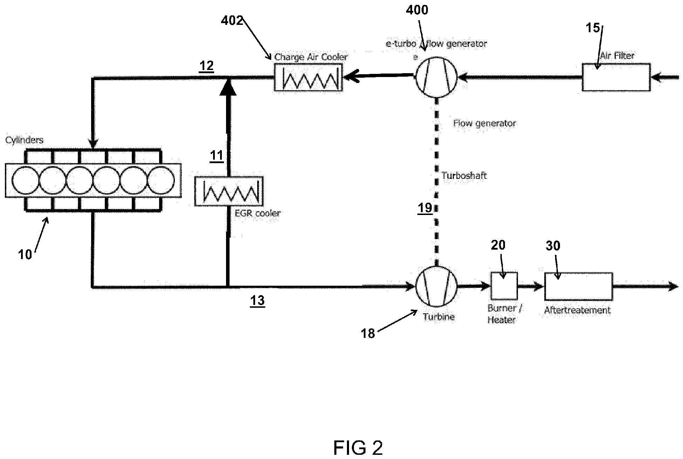

Turning to Figure 2 an internal combustion engine 10 is illustrated with a conventional turbo compressor arrangement, i.e. a turbine 18 arranged in the exhaust line 13, that is mechanically coupled to a compressor 400 via a turbo shaft 19. In this example, the compressor can be of a conventional type. The compressor 400 boosts the pressure, via a charge air cooler 402 into the engine 10. If a control system detects that the EAS 30 is in need for additional heating , heater system, e.g. diesel burner 20 is activated, to generate a catalytic converter temperature to a calculated set target temperature of the catalytic converter. This can be executed by a feed forward control, e.g. implemented in hardware or software in a control system, geared to a standard acceptable flow provided to the heater system 20 that allows the heater system to heat at its maximum heater system capacity. It can also in a feedback loop control, e.g. by a flow controlled process, that increases the fuel in dependence of increased flow in the exhaust line 13 or by a temperature controlled process, that increases the flow in dependence of a measured or calculated threshold temperature of the heater system 20 adjacent the exhaust line 13. Since heat transfer is most efficient at high temperatures, this latter option is a preferred mode.

Instead of a conventional compressor an e-turbo may be arranged in the intake line 12, that is mechanically driven by turboshaft 19, but can also be powered by an electromotor. The e-turbo is arranged in a fluid communication path in intake line 12 between the air intake 15.

The internal combustion engine 10 may comprise an exhaust gas recirculation (egr) line 11 for use, in egr mode, to supply exhaust gas to the intake line 12.

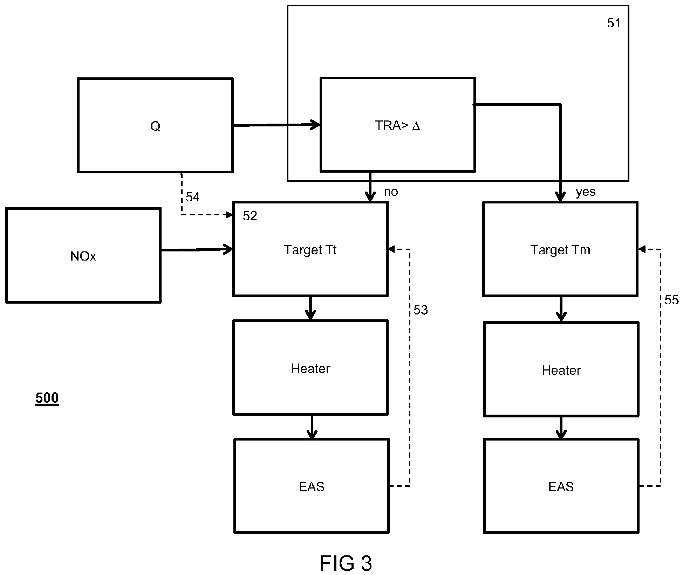

Figure 3 further exemplifies a control scheme 500 executed by control system 50 (see Figure 1) for selective control of the heater system 20 for generating heat generated by the heater system towards the aftertreatment system. The control flow has a control decision mode 51 that continuously or at least at intermittent intervals queries an available heat enthalpy Q from the exhaust gas. This can be done by measuring, temperature, pressure and a flow, essentially, or using engine parameters that will provide equivalent results or estimations known to a skilled person. Such a query may be dependent on vehicle state operations such as engine temperature, engine load and may be active in initial stages of an engine control after cold start.

At the same time, a time filtered signal TRA is derived of the calculated enthalpy signal, which smoothens transient variations within a chosen time constant, e.g. in the order of 50 and 400 sec. The more transient the cycle's nature is, the larger the discrepancy between the low pass filtered and the unfiltered signal will be. Therefore, the transient indicator (TRA) may be suitably defined by:

$$TRA_{(t)} = Q_{(t)} - Q_{fil\ (t)}$$

i.e. a calculated enthalpy difference of actual exhaust gas enthalpy signal (Q) and time filtered exhaust gas enthalpy signal (Qfltr). If the transient indicator TRA shows an increased transient level of exhaust gas energy, it will go to a robust constant aftertreatment operating temperature target i.e. an elevated catalytic converter temperature Tm of e.g. higher than 200-250 deg Celsius.

If the transient indicator is below a calibratable threshold for a certain amount of time, the controller 500 may calculate a variable SCR target temperature based on the transient indicator in block 52. One optimization strategy may be using a set of fixed, lower temperature settings, via a calibration routine that correlates a transient indicator to a calculated set target temperature Tt.

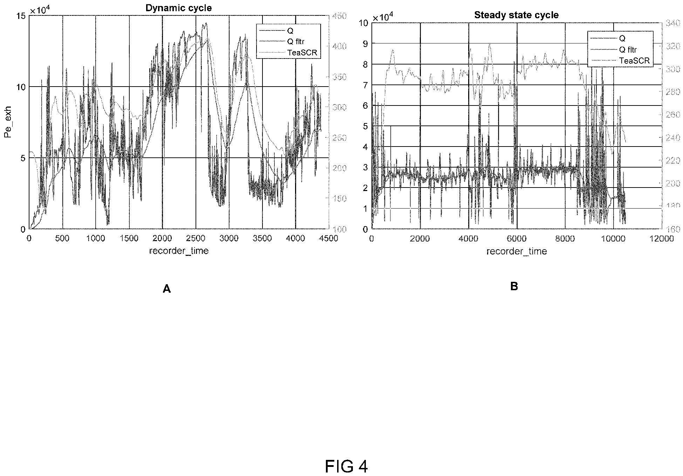

Figure 4A and 4B show exemplary traces of a dynamic cycle and a steady state cycle respectively. In particular, an actual measured enthalpy Q and a time filtered enthalpy Qfltr are shown, together with a measured temperature TeaSCR. The temperature is measured downstream the heater - eg. just before, at or after the catalytic converter. In both the dynamic cycle and the steady state cycle it is shown that the measured temperature substantially follows the time filtered exhaust gas enthalpy signal, which is thus a good predictor of the temperature profile of the catalytic converter.

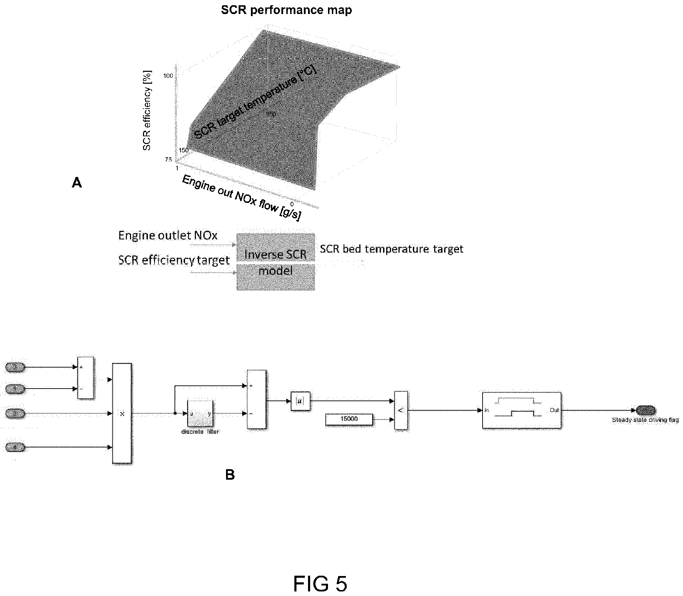

Another optimation strategy that may be based on a required SCR NOx conversion using an inverse SCR model. Such a model may be formed by a calibratable lookup table, of which an exemplary view is shown in Figure 5A. This model outputs a variable target SCR bed temperature Tt as a calculated set target temperature. The model may include a temperature drop estimation of all the aftertreatment components between the SCR and the heating element introduced which can be captured by a look-up table (fed with the engine massflow and the ambient temperature). Accordingly a heater target temperature may be calculated as a function of a temperature drop of a measured exhaust gas.

The engine outlet NOx flow may be calculated as

$$\dot{N}O_x - \dot{m} \cdot NO_x \cdot 10^{-6} \frac{M_{NO_2}}{M_{exh}}$$

Where,

$\dot{N}O_x$ = Exhaust gas NOx flow
m = Exhaust gas massflow
NOx = NOx concentration [ppm]
$M_{NO2}$ = Molar mass of $NO_2$
$M_{exh}$ = Molar mass of diesel exhaust gas

The SCR efficiency target may be determined differently for two operational cases:

- based on specific NOx emissions while driving (g/kWh)
- based on specific NOx emissions while the engine is in idle state (g/h)

The specific NOx target in driving operation is defined as:

$$NO_{x\,spec} = \frac{\dot{N}O_x}{M\omega} \cdot 3600$$

Where:

M = Engine flywheel torque
$\omega$ = The angular velocity of the engine flywheel.

In idle operation specific NOx emissions may be defined as

$$NO_{x\,spec} = \dot{N}O_x \cdot 3600$$

The SCR efficiency target $\eta$ may be defined by the specific NOx target and a calibratable NOx target in g/kWh for driving operation and a target in g/h for idle operation.

$$\eta = 1 - \frac{NO_{x\,trgt}}{NO_{x\,spec}}$$

Thus, an inverse model may provide a target temperature Tt which can be used in an optional closed loop control logic 53. Alternatively a feedforward enthalpy gap can be calculated with respect to the difference between the temperature target and the engine outlet temperature measured at 54. The enthalpy loss is given by

$$Q = \dot{m} \; cp \; \Delta T$$

Where

Q = Exhaust gas enthalpy
m = Exhaust gas massflow
cp = Specific heat of gas at constant pressure
ΔT = Temperature difference between the temperature target and the engine outlet temperature:

$$\Delta T = T_{e\,exh} - T_{E heater\,target}$$

Figure 5B shows a practical example flow chart wherein input values 1-4 are provided as

1= Ambient temperature
3= Exhaust gas temperature
2= ṁ (Exhaust gas massflow)
4= cp (specific heat of gas at constant pressure)

A difference is provided by a substractor resulting ΔT: Temperature difference between the exhaust gas and ambient.

A multiplicator is provided for multiplying the resultant ΔT with input values 2 and 4, amounting to a calculated heat enthalpy of the exhaust gas. A time discrete filter is provided, with a filter constant e.g. of 1-5 seconds, preferably 2 seconds.

A subtractor is provided that substracts the calculated heat enthalpy with the time filtered enthalpy, resulting in an absolute value of transient level error signal |u |, which is compared with a calibration level to distinguish between a transient and steady state.

A flag is rased that a steady state is reached when the time error signal u is smaller than the set calibration threshold for e.g. about 50-150 seconds.

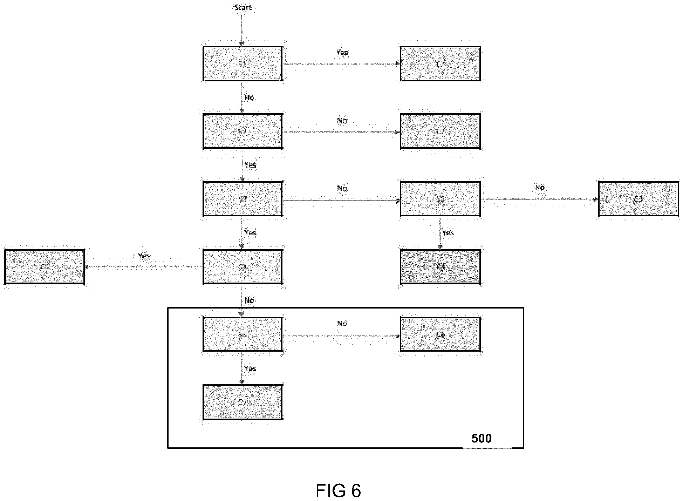

Figure 6 shows a further flow diagram, of control steps executed by a controller, eg. of the type disclosed in Figure 1 for providing a calibratable target temperature of the catalytic converter to a calculated set target temperature of the catalytic converter, based on a calculated or measured engine NOx output level in a first engine state C5 or, in a second engine state C7, to a fixed robust target temperature that is higher than the converter temperature in the first engine state C5. To this end a first control step S1 may check whether the engine is in an engine brake or motoring condition. If yes, due to absence of combustion, an alternative heater strategy C1 may be used e.g. if the thermal measure is directly powered by flywheel power.

If no or not relevant, in a further control step S2 a precheck is executed whether the after treatment system is already in a heated state, obviating control of the heater system. If no, the aftertreatment system may be conventionally heated using full power of the e-heater that may be limited by the exhaust mass flow in condition C2. If yes, engine after treatment system is in a keep warm control state. In step S3, it may be checked whether the engine (while the engine after treatment system is in heated state) is still in a heat up condition or a fuel conversion mode wherein the amount of produced NOx is relatively low. If no, a control step S6 may be executed to check whether the heater may be used in a regeneration mode. If no, the heater may be switched off in condition C3. If yes, a regeneration program may be executed in condition C4. If, in step S3 it is found that the engine is in a heat up condition or in a low NOx (e.g: less efficient) engine efficiency mode; in step S4 it may be tested whether the engine is in an idle mode; e.g. idling sufficiently long so that the exhaust temperature will become too low; which may be controlled in a different manner, e.g. a converter temperature may be set according to a calibratable target temperature that may be controlled by a heater control loop. If the engine is not in an extended idle mode (S4) in step S5 control system 500 calculates an enthalpy difference of an actual exhaust gas enthalpy signal and a time filtered exhaust gas enthalpy signal, wherein, when a calculated enthalpy difference signal is lower than a set threshold value, the control system activates the heater system, after a predetermined set time duration, e.g. ranging between 30 and 250 seconds, to generate a catalytic converter temperature to a calculated set target temperature of the catalytic converter, based on an engine NOx output level and a target NOx output level in, steady state condition C6. If in step S5 the calculated enthalpy difference is found higher than a set threshold value, in step S5 a transient condition C7 is controlled wherein the control system activates the heater system to generate an elevated catalytic converter temperature higher than the calculated set target temperature that is robust for substantial variation of NOx output values in a more transient condition. It is noted that steps S1-S4 non-essential prechecks that are merely exemplary to illustrate how inventive controller 500 can be combined with other control steps.

Any reference signs in the claims should not be construed as limiting the scope.

Claims

1. An internal combustion engine comprising:

   - a heater system disposed near or in an exhaust aftertreatment system to generate heat to the exhaust aftertreatment system including a catalytic converter;
   - a control system arranged to control the heater system; wherein the control system is programmed to calculate an enthalpy difference of an actual exhaust gas enthalpy signal and a time filtered exhaust gas enthalpy signal, wherein, when a calculated enthalpy difference signal is lower than a set threshold value, the control system activates the heater system, after a predetermined set time duration, to generate a catalytic converter temperature to a calculated set target temperature of the catalytic converter, based on an engine NOx output level and a target NOx output level.

2. An internal combustion engine according to claim 1, wherein, when a calculated enthalpy difference is higher than a set threshold value, the control system activates the heater system to generate an elevated catalytic converter temperature higher than the calculated set target temperature.

3. An internal combustion engine according to any preceding claim, wherein the predetermined set time duration ranges between 30 and 250 seconds.

4. An internal combustion engine according to any preceding claim, wherein a time constant of the time filtered gas enthalpy ranges between 50 and 400 sec.

5. An internal combustion engine according to any preceding claim, wherein a calculated set target temperature of the catalytic converter ranges between 170 and 400 deg Celsius if a calculated enthalpy difference is lower than the set threshold value.

6. An internal combustion engine according to any preceding claim, wherein the set target temperature is calculated with a calibratable lookup table correlating an conversion effciency target of the catalytic converter and engine NOx output level to the set target temperature.

7. An internal combustion engine according to any preceding claim, wherein the heater system is disposed in or near an exhaust line of the internal combustion engine, and wherein the heat is transported via the exhaust line to the after treatment system.

8. An internal combustion engine according to any preceding claim, wherein the heater system is disposed in the engine aftertreatment system.


**Patentansprüche**

1. Verbrennungsmotor, der Folgendes umfasst:

   - ein Heizsystem, das in der Nähe oder in einem Abgasnachbehandlungssystem angeordnet ist, um Wärme für das Abgasnachbehandlungssystem einschließlich eines Katalysators zu erzeugen;
   - ein Steuersystem, das zur Steuerung des Heizsystems eingerichtet ist; wobei das Steuersystem so programmiert ist, dass es eine Enthalpiedifferenz zwischen einem tatsächlichen Abgas-Enthalpiesignal und einem zeitgefilterten Abgas-Enthalpiesignal berechnet, wobei, wenn ein berechnetes Enthalpiedifferenzsignal niedriger als ein eingestellter Schwellenwert ist, das Steuersystem das Heizsystem nach einer vorbestimmten eingestellten Zeitdauer aktiviert, um eine Katalysatortemperatur auf eine berechnete eingestellte Zieltemperatur des Katalysators zu erzeugen, die auf einem Motor-NOx-Ausgangsniveau und einem Ziel-NOx-Ausgangsniveau basiert.

2. Verbrennungsmotor nach Anspruch 1, wobei das Steuersystem, wenn eine berechnete Enthalpiedifferenz höher als ein eingestellter Schwellenwert ist, das Heizsystem aktiviert, um eine erhöhte Katalysatortemperatur zu erzeugen, die höher als die berechnete eingestellte Zieltemperatur ist.

3. Verbrennungsmotor nach einem der vorhergehenden Ansprüche, wobei die vorbestimmte eingestellte Zeitdauer zwischen 30 und 250 Sekunden liegt.

4. Verbrennungsmotor nach einem der vorhergehenden Ansprüche, wobei die Zeitkonstante der zeitgefilterten Gasenthalpie zwischen 50 und 400 Sekunden liegt.

5. Verbrennungsmotor nach einem der vorhergehenden Ansprüche, wobei eine berechnete eingestellt Zieltemperatur des Katalysators zwischen 170 und 400 Grad Celsius liegt, wenn eine berechnete Enthalpiedifferenz niedriger ist als der eingestellte Schwellenwert.

6. Verbrennungsmotor nach einem der vorhergehenden Ansprüche, wobei die eingestellte Zieltemperatur mit einer kalibrierbaren Nachschlagetabelle berechnet wird, die ein Umwandlungswirkungsgradziel des Katalysators und das Motor-NOx-Ausgangsniveau des Motors mit der eingestellten Zieltemperatur korreliert.

7. Verbrennungsmotor nach einem der vorhergehenden Ansprüche, wobei das Heizsystem in oder nahe einer Abgasleitung des Verbrennungsmotors angeordnet ist, und wobei die Wärme über die Abgasleitung zum Nachbehandlungssystem transportiert wird.

8. Verbrennungsmotor nach einem der vorhergehenden Ansprüche, wobei das Heizsystem im Motornachbehandlungssystem angeordnet ist.

**Revendications**

1. Moteur à combustion interne comprenant :

   - un système de chauffage disposé près de ou dans un système de post-traitement d'échappement pour générer de la chaleur pour le système de post-traitement d'échappement incluant un convertisseur catalytique ;
   - un système de commande disposé de façon à commander le système de chauffage ; lequel système de commande est programmé pour calculer la différence d'enthalpie entre un signal d'enthalpie de gaz d'échappement réel et d'un signal d'enthalpie de gaz d'échappement filtrée temporellement, dans lequel, quand le signal de différence d'enthalpie calculé est inférieur à une valeur de seuil fixée, le système de commande active le système de chauffage, après une période de temps fixée prédéterminée, pour générer une température de convertisseur catalytique correspondant à une température cible fixée calculée du convertisseur catalytique, sur la base du niveau d'émission de NOx du moteur et du niveau d'émission de NOx cible.

2. Moteur à combustion interne selon la revendication 1, dans lequel, quand la différence d'enthalpie calculée est supérieure à une valeur de seuil fixée, le système de commande active le système de chauffage pour générer une température de convertisseur catalytique élevée, supérieure à la température cible fixée calculée.

3. Moteur à combustion interne selon l'une quelconque des revendications précédentes, dans lequel la période de temps fixée prédéterminée est située dans la plage comprise entre 30 et 250 secondes.

4. Moteur à combustion interne selon l'une quelconque des revendications précédentes, dans lequel la constante temporelle de l'enthalpie de gaz filtrée temporellement est située dans la plage comprise entre 50 et 400 secondes.

5. Moteur à combustion interne selon l'une quelconque des revendications précédentes, dans lequel la température cible fixée calculée du convertisseur catalytique est située dans la plage comprise entre 170 et 400 degrés Celsius si la différence d'enthalpie calculée est inférieure à la valeur de seuil fixée.

6. Moteur à combustion interne selon l'une quelconque des revendications précédentes, dans lequel la température cible fixée est calculée avec une table de correspondance étalonnable corrélant la cible de rendement de conversion du convertisseur catalytique et le niveau d'émission de NOx du moteur à la température cible fixée.

7. Moteur à combustion interne selon l'une quelconque des revendications précédentes, dans lequel le système de chauffage est disposé dans ou près d'une ligne d'échappement du moteur à combustion interne, et dans lequel la chaleur est transportée via la ligne d'échappement jusqu'au système de post-traitement.

8. Moteur à combustion interne selon l'une quelconque des revendications précédentes, dans lequel le système de chauffage est disposé dans le système de post-traitement de moteur.

Control
50

Heater
20

ICE 10

13

EAS 30

15

12

14

100

FIG 1

**402**

**400**

e-turbo / flow generator

**15**

Charge Air Cooler

Air Filter

**12**

Flow generator

Cylinders

**11**

Turboshaft

EGR cooler

**19**

**10**

**20**

**30**

**13**

Burner / Heater

Aftertreatement

**18**

Turbine

FIG 2

FIG 3

FIG 4

SCR performance map

A

Engine outlet NOx

SCR efficiency target

Inverse SCR model

SCR bed temperature target

B

FIG 5

FIG 6

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2021015613 A
- US 2021301743 A
- WO 2020192973 A
- WO 2020223199 A